# EUROPÄISCHE PATENTSCHRIFT

(11) **EP 1 329 545 B1**
(45) Veröffentlichungstag und Bekanntmachung des Hinweises auf die Patenterteilung: **08.09.2004**
(21) Anmeldenummer: 02027800.8
(22) Anmeldetag: 12.12.2002
(51) Int. Cl.: D06F 37/30

(54) **Verfahren zum Betrieb einer Waschmaschine**
Process for operating a washing machine
Procédé de functionnement d'une machine à laver

(30) Priorität: 21.01.2002 DE 10202252
(43) Veröffentlichungstag der Anmeldung: 23.07.2003
(73) Patentinhaber: Miele & Cie. KG, 33332 Gütersloh (DE)
(72) Erfinder: Herden, Rudolf, 33442 Herzebrock (DE); Olschewski, Rüdiger, 33378 Rheda-Wiedenbrück (DE)

(56) Entgegenhaltungen:
- EP-A- 0 984 092
- EP-A- 1 067 232
- DE-A- 19 522 393
- DE-A- 19 952 464

## Beschreibung

Die Erfindung betrifft ein Verfahren zur Regelung der Drehzahl und Steuerung einer mit Wäsche gefüllten Trommel (Trommeldrehzahl) bei einer Waschmaschine mit einem schwingend aufgehängten Laugenbehälter, in dem die Trommel drehbar gelagert ist, wobei der Antrieb der Trommel durch einen Antriebsmotor und eine zwischen einer Antriebswelle der Trommel und einer Abtriebswelle des Antriebsmotors angeordnete Übertragungseinheit (Riementrieb) erfolgt, mit einer Regel- und Steuereinheit zur Beeinflussung der Drehzahl des Antriebsmotors (Motordrehzahl). Ein solches Verfahren ist beispielsweise in EP 1 067 232 A offenbart.

Neben dem Direktantrieb (s. bspw. WO 98/36123 A2) ist es bei Trommelwaschmaschinen bekannt und allgemein üblich, den Antriebsmotor am unteren Bereich des Laugenbehälters zu befestigen und die Kraftübertragung von der Motorwelle zur Trommelwelle durch eine mechanische Übertragungseinheit vorzunehmen. Die bekannteste Variante ist der Riementrieb, bei der ein elastischer Riemen in einer Riemenführung auf der Motorwelle und der Vertiefung einer mit der Trommelwelle drehfest verbundenen Riemenscheibe läuft. Sie wird beispielsweise bei einer von der Anmelderin hergestellten und vertriebenen Waschmaschine W 377 eingesetzt. Neben dem Riementrieb sind andere Übertragungseinheiten, beispielsweise Reibrad- oder andere Getriebe denkbar.

Bei programmgesteuerten Trommelwaschmaschinen, auch bei der vorgenannten W 377, ist es üblich, die Trommeldrehzahl sowohl programm- als auch zustandsabhängig zu variieren. Hierzu werden über eine in einer Mikroprozessor-Steuerung integrierte Regel- und Steuereinheit Motordrehzahl-Sollwerte vorgegeben und der Antriebsmotor über eine Leistungselektronik nach dieser Sollwertvorgabe bestromt. Zur Regelung der Trommeldrehzahl wird bei der W 377 die Motordrehzahl über einen Tachogenerator gemessen und über das theoretische Übersetzungsverhältnis des Riementriebs in die Trommeldrehzahl umgerechnet. Die tatsächliche Trommeldrehzahl ist nicht bekannt. Ein Nachteil des vorbeschriebenen Antriebs und der auf dem theoretischen Übersetzungsverhältnis beruhenden Regelung der Trommeldrehzahl besteht darin, dass das reale Übersetzungsverhältnis des Riementriebs von der Geometrie und dem Aufbau des Riemens abhängt, so dass fertigungsbedingte Toleranzen Abweichungen verursachen. Weichen realer und theoretischer Wert voneinander ab, so unter- oder überschreitet die Trommeldrehzahl ihren Sollwert, ohne dass diese Abweichung von der Regel- und Steuereinheit erkannt wird. Der Fehler steigt mit zunehmender Trommeldrehzahl. Aus diesem Grund muss die Waschmaschinensteuerung auf das jeweilige Übersetzungsverhältnis abgestimmt sein, und deshalb bei einem Wechsel der Riemenbeschaffenheit neu programmiert werden. Die Verwendung verschiedener Riemensorten in einer Fertigungslinie ist nicht möglich.

Aus der DE 199 52 464 A1 ist es bei einer Trommelwaschmaschine bekannt, parallel zu einem Stoßdämpfer oder in diesem integriert einen Wegsensor anzuordnen, der die gewichtsabhängige Laugenbehälterabsenkung ermittelt. Bei Drehung der Trommel mit einer Drehzahl, bei der die Wäsche am Trommelmantel anliegt, entstehen durch ungleichmäßige Wäscheverteilung, die immer vorhanden ist, Unwuchten. Die auf die Unwuchten wirkende Zentrifugalkraft überlagert sich vektoriell der Gewichtskraft, so dass das Gewichtssignal unwuchtabhängigen periodischen Schwankungen ausgesetzt ist, die zur Unwuchtermittlung durch eine Messeinrichtung herangezogen werden können. Anstelle des Wegsensors kann beispielsweise ein aus der DE 195 22 393 A1 bekannter Beschleunigungssensor zur Unwuchtsensierung verwendet werden.

Der Erfindung stellt sich die Aufgabe, ein Verfahren für die Regelung der Drehzahl einer mit Wäsche gefüllten Trommel (Trommeldrehzahl) bei einer Waschmaschine der eingangs genannten Art und deren Steuerung zu offenbaren, das eine Selbstjustierung für die Drehzahlregelung und darüber hinaus eine Selbstkontrolle der Steuerung ermöglicht.

Erfindungsgemäß wird diese Aufgabe bei einem Verfahren nach dem Oberbegriff des Anspruchs 1 durch dessen kennzeichnende Merkmale gelöst.

Beim Verfahren nach der Erfindung kann sehr vorteilhaft eine bereits vorhandene Messeinrichtung zur Unwuchtsensierung eingesetzt werden (vgl. auch obige Würdigung der DE 199 52 464 A1 und der DE 195 22 393 A1). Es wird noch angegeben, dass es schon bekannt ist (EP 201 902 B1) das unterschiedliche Keilriemenübersetzungsverhältnis am Abtrieb eines Motors bei Regelung der Drehzahl am Ausgang des Keilriemengetriebes selbstanpassend zu berücksichtigen.

In vorteilhafter Weiterbildung dieses Verfahrens wird dann eine weitere Auswerteschaltung eingesetzt, die die von einer Drehzahlmesseinrichtung ermittelte Motordrehzahl und die durch die Auswerteschaltung bestimmte Trommeldrehzahl vergleicht und aus dem Vergleichswert das Übersetzungsverhältnis der Übertragungseinheit berechnet (Anspruch 2). Der von der weiteren Auswerteschaltung berechnete Wert für das Übersetzungsverhältnis kann dann einem mit der Regel- und Steuereinheit in Verbindung stehenden Speicher zugeführt werden und anschließend kann die Regel- und Steuereinheit die Motordrehzahl in Abhängigkeit vom abgespeicherten Wert des Übersetzungsverhältnisses beeinflussen (Anspruch 3). Geht man davon aus, dass sich das Übersetzungsverhältnis während der Gebrauchsdauer einer Waschmaschine nicht mehr ändert, braucht beim erfindungsgemäßen Verfahren nur einmal gemessen zu werden, wodurch Rechnerleistung eingespart wird. Alternativ ist eine periodische Wiederholung und ein "Update" des abgespeicherten Übersetzungsverhältnisses möglich. Hierdurch werden Veränderungen an der Übertragungseinrichtung, welche alterungsbedingt oder durch Auswechseln von Teilen entstehen können, erkannt.

Es ist ebenfalls vorteilhaft, wenn bei Selbstkontrolle der Regel- und Steuereinheit die weitere Auswerteschaltung bei Berechnung eines Übersetzungsverhältnisses, welches unter einem Mindestwert liegt, auf eine Fehlfunktion der Übertragungseinheit schließt und ein Warnsignal und/oder den Abbruch eines mit der Waschmaschine durchgeführten Waschprogramms verursacht (Anspruch 4). Hierdurch kann beispielsweise ein Riss oder das Abspringen des Riemens erkannt werden.

Ein Ausführungsbeispiel der Erfindung ist in den Zeichnungen rein schematisch dargestellt und wird nachfolgend näher beschrieben. Es zeigt
- Figur 1: den Aufbau einer zur Durchführung des erfindungsgemäßen Verfahrens geeigneten Waschmaschine (1)
- Figur 2: das Blockschaltbild der Mess- und Auswerteschaltungen (M, A₁, A₂) zur Bestimmung der Trommeldrehzahl n_{T} und des Übersetzungsverhältnisses der Übertragungseinheit

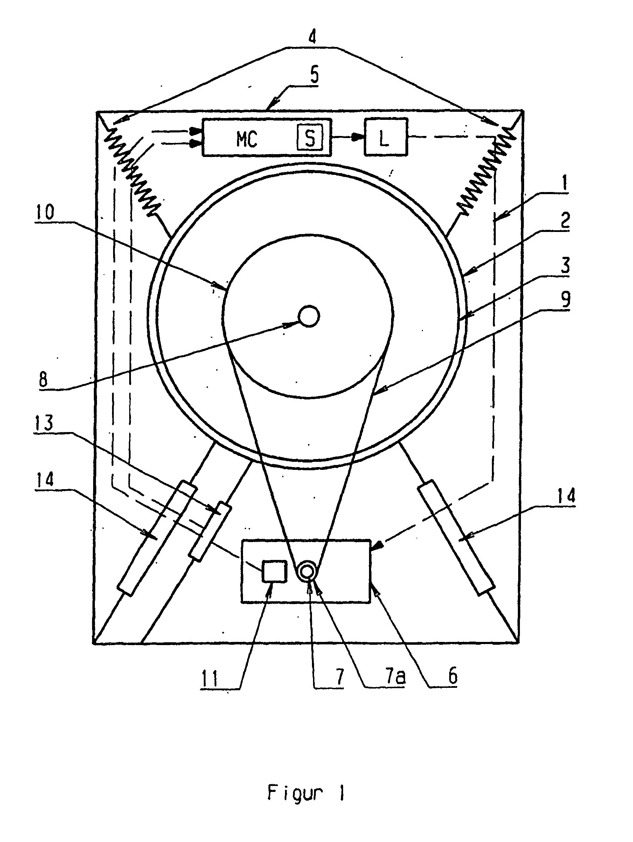

Der Laugenbehälter (2) der in Figur 1 dargestellten Waschmaschine (1) mit der darin drehbar gelagerten Trommel (3) ist an Federn (4) im oberen Bereich des Gehäuses (5) aufgehängt. Zum Antrieb der Trommel (3) ist an den unteren Bereich des Laugenbehälter (2) ein Motor (6) aufgehängt. Die Kraftübertragung von der Abtriebswelle (7) des Motors (6) zur Antriebswelle (8) der Trommel (3) erfolgt durch einen Riemen (9). Dieser läuft in einer Riemenführung (7a) auf der Abtriebswelle (7) und auf einer Riemenscheibe (10), die mit der Antriebswelle (8) drehfest verbunden ist. Die Motordrehzahl n_{M} wird durch einen Tachogenerator (11) als Drehzahlmesseinrichtung ermittelt.

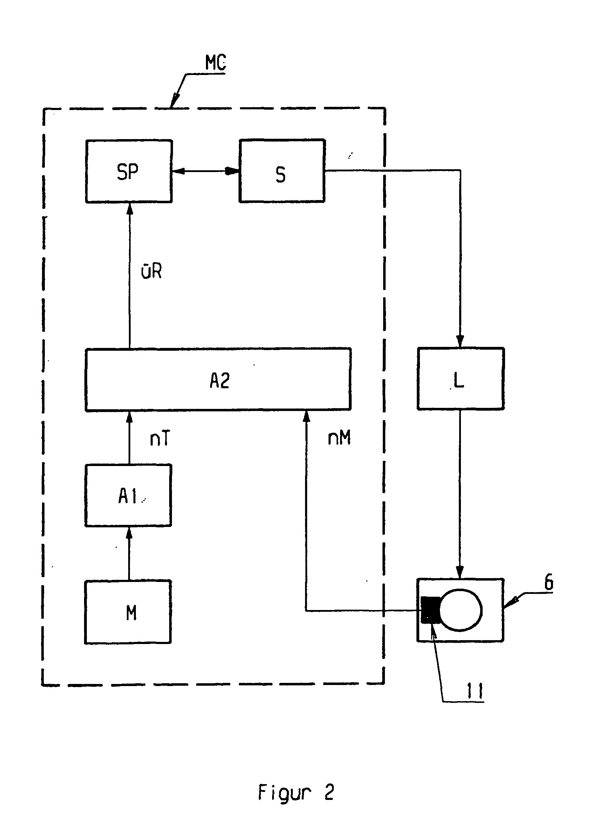

Sobald Wäsche (nicht dargestellt) in die Trommel (3) gelegt wird, ändert sich die Gesamtmasse des Laugenbehälters (2), die aus der Masse des leeren Laugenbehälters (2) und der Masse des Wäsche besteht. Durch Massezunahme werden die Federn (4) weiter gedehnt, so dass der Laugenbehälter (2) um so tiefer hängt, je größer die Masse der eingefüllten Wäsche ist. Die gewichtskraftbedingte Absenkung des Laugenbehälters (2) wird mit einem Wegsensor (13) ermittelt. Damit liefert der Wegsensor (13) ein Signal, das proportional zu der eingefüllten Wäschemenge ist. Für den Schleuderbetrieb der Waschmaschine (1) muss sichergestellt werden, dass die Schwingamplitude beim Durchgang durch den kritischen Drehzahlbereich (Resonanz des Feder-Masse-Systems bestehend aus den Federn (4) und der Masse des gefüllten Laugenbehälters (2)) begrenzt wird. Dafür sorgen zwei Stoßdämpfer (14) zwischen dem Laugenbehälter (2) und dem Gehäuseboden. Der Wegsensor (13) ist parallel zu einem Stoßdämpfer (14) oder in diesem integriert (nicht dargestellt) angeordnet. Der dynamische Signalanteil des mit dem Wegsensor (13) aufgenommenen Signals kann, wie an anderer Stelle beschrieben, durch eine Messeinrichtung (M, s. Figur 2) zur Unwuchtermittlung herangezogen werden. Anstelle des Wegsensors (13) kann beispielsweise ein aus der DE 195 22 393 A1 bekannter Beschleunigungssensor (nicht dargestellt) zur Unwuchtsensierung verwendet werden.

Eine erste Auswerteschaltung (A₁) bestimmt aus dem Unwuchtsignal die Trommeldrehzahl n_{T}, eine zweite Auswerteschaltung (A₂) berechnet hieraus das Übersetzungsverhältnis des Riementriebs. Die Funktionsweise dieser Schaltungen ist in dem Blockschaltbild nach Figur 2 dargestellt und nachfolgend beschrieben:

Die mit Wäsche gefüllte Trommel (3) wird vom Antriebsmotor (6) auf eine Drehzahl n_{T} beschleunigt, welche über der Drehzahl (Anlegedrehzahl n_{A}) liegt, bei der die Wäsche zentrifugalkraftbedingt am Mantel der Trommel (3) anliegt. Hierzu wird über eine in einer Mikroprozessor-Steuerung (MC) integrierte Regel- und Steuereinheit (S) der entsprechende Motordrehzahl-Sollwert vorgegeben und der Antriebsmotor (6) über eine Leistungselektronik (L) nach dieser Sollwertvorgabe bestromt. Zur Regelung der Trommeldrehzahl n_{T} wird die Motordrehzahl n_{M} mit dem Tachogenerator (11) gemessen und über ein theoretisches Übersetzungsverhältnis ü_{T} des Riementriebs in die Trommeldrehzahl n_{T} umgerechnet. Die tatsächliche Trommeldrehzahl n_{T} und das reale Übersetzungsverhältnis ü_{R} ist nicht bekannt. Das theoretische Übersetzungsverhältnis ü_{T} ist in einem mit der Regel- und Steuereinheit (S) in Verbindung stehenden Speicher (SP) bei der Produktion der Waschmaschine (1) voreingestellt worden. Hier kann ein Wert verwendet werden, der niedriger als mögliche reale Übersetzungsverhältnisse ü_{R} sind, so dass die Anlegedrehzahl n_{A} mit Sicherheit überschritten wird. Beim Anlegen der Wäsche an den Mantel der Trommel (3) entsteht durch ungleichmäßige Wäscheverteilung, die immer vorhanden ist, eine Unwucht. Die auf die Unwuchten wirkende Zentrifugalkraft überlagert sich vektoriell der Gewichtskraft, so dass das vom Wegsensor (13) aufgenommene Gewichtssignal unwuchtabhängigen periodischen Schwankungen ausgesetzt ist. Diese Schwankung wird von der Messeinrichtung als Unwuchtsignal ermittelt. Bei Verwendung eines Beschleunigungssensors nimmt dieser die unwuchtabhängigen periodischen Schwankungen direkt als Unwuchtsignal auf.

Die erste Auswerteschaltung (A₁) filtert aus dem Frequenzspektrum des mit der Messeinrichtung ermittelten dynamischen Signalanteils die niedrigste Frequenz und bestimmt hieraus die reale Trommeldrehzahl n_{T}. Der Wert auf diese Weise ermittelte Trommeldrehzahlwert n_{Ti} wird einer zweiten Auswerteschaltung (A₂) zugeführt. Diese vergleicht den vom Tachogenerator (11) gemessenen Motordrehzahlwert n_{Mi} mit dem Trommeldrehzahlwert n_{Ti} und berechnet daraus das momentane reale Übersetzungsverhältnis ü_{Ri} des Riementriebs. Dieser Wert wird dem mit der Regel- und Steuereinheit (S) in Verbindung stehenden Speicher (SP) zugeführt und überschreibt den ursprünglichen Wert ü_{T}. Die weitere programm- und zustandsabhängige Einstellung der Trommeldrehzahl n_{T} erfolgt dann durch Regelung der Motordrehzahl n_{M} und Umrechnung auf Basis dieses Übersetzungsverhältnis ü_{Ri}. Geht man davon aus, dass sich das Übersetzungsverhältnis während der Gebrauchsdauer einer Waschmaschine (1) nicht mehr ändert, reicht es aus, ihn bei ihrer ersten Inbetriebnahme zu messen und abzuspeichern. Dies kann während der Durchführung des ersten Waschprogramms oder durch Start eines Kontrolllaufs über eine Tariertaste (nicht dargestellt) erfolgen. Alternativ ist eine periodische Wiederholung und ein "Update" des abgespeicherten Übersetzungsverhältnisses ü_{Ri} durch einen neuen Wert ü_{Ri+1} möglich. Wenn die zweite Auswerteschaltung (A₂) ein Übersetzungsverhältnis ü_{R} berechnet, welches unter einem Mindestwert liegt (i. A. bei Null), wird auf eine Fehlfunktion der Übertragungseinheit geschlossen. Bei der Verwendung eins Riementriebs ist dann der Riemen gerissen oder abgesprungen. In diesem Fall verursacht die Auswerteschaltung (A₂) ein Warnsignal und/oder der Abbruch des laufenden Waschprogramms. Der gespeicherte Wert ü_{T} oder ü_{Ri} wird dann nicht überschrieben.

## Patentansprüche

1. Verfahren zur Regelung der Drehzahl und Steuerung einer mit Wäsche gefüllten Trommel (3) bei einer Waschmaschine (1) mit einem schwingend aufgehängten Laugenbehälter (2), in dem die Trommel (3) drehbar gelagert ist, wobei der Antrieb der Trommel (3) durch einen Antriebsmotor (6) und eine zwischen einer Antriebswelle (8) der Trommel (3) und einer Abtriebswelle (7) des Antriebsmotors (6) angeordnete Übertragungseinheit (9, 10) erfolgt, mit einer Regel- und Steuereinheit (S) zur Beeinflussung der Drehzahl des Antriebsmotors (6)
**dadurch gekennzeichnet, dass** die Waschmaschine (1) versehen ist mit einer Messeinrichtung (M), welche den dynamischen Anteil aus dem Signal eines Sensors ermittelt, der den Weg oder die Beschleunigung des Laugenbehälters (2) aufnimmt, und
**dass** die Regel- und Steuereinheit (S) den Antriebsmotor (6) mit einer Mindest-Motordrehzahl n_{M} antreibt, welche bei ordnungsgemäßem Zustand der Übertragungseinrichtung eine Trommeldrehzahl n_{T} verursacht, die über der Anlegedrehzahl n_{A} liegt, bei der die Wäsche zentrifugalkraftbedingt am Mantel der Trommel (3) anliegt, und dass eine Auswerteschaltung (A₁) aus dem Frequenzspektrum des mit der Messeinrichtung ermittelten dynamischen Signalanteils die niedrigste Frequenz filtert und hieraus die Trommeldrehzahl n_{Ti} bestimmt, und dass die aus Mindest-Motordrehzahl n_{M} und gemessener Trommeldrehzahl n_{Ti} gemessenen Werte zur Selbstjustierung bzw. Selbstkontrolle der Regel- und Steuereinheit (5) heranziehbar sind.

2. Verfahren nach Anspruch 1
**dadurch gekennzeichnet,**
**dass** bei Selbstjustierung der Regel- und Steuereinheit (5) eine Bestimmung des Übersetzungsverhältnisses der Übertragungseinheit (9, 10) vorgenommen wird und dabei eine weitere Auswerteschaltung (A₂) die von einer Drehzahlmesseinrichtung (11) ermittelte Motordrehzahl n_{Mi} und die durch die Auswerteschaltung (A₁) bestimmte Trommeldrehzahl n_{Ti} vergleicht und aus dem Vergleichswert das Übersetzungsverhältnis ü_{R} der Übertragungseinheit berechnet.

3. Verfahren nach Anspruch 2,
**dadurch gekennzeichnet,**
**dass** der von der weiteren Auswerteschaltung (A₂) berechnete Wert für das Übersetzungsverhältnis ü_{R} einem mit der Regel- und Steuereinheit (S) in Verbindung stehenden Speicher (SP) zugeführt wird und dass anschließend die Regel- und Steuereinheit (SP) die Motordrehzahl n_{M} in Abhängigkeit vom abgespeicherten Wert des Übersetzungsverhältnisses ü_{R} beeinflusst.

4. Verfahren nach mindestens einem der vorhergehenden Ansprüche 1 bis 3,
**dadurch gekennzeichnet,**
**dass** die weitere Auswerteschaltung (A₂) bei Berechnung eines Übersetzungsverhältnisses ü_{R}, welches unter einem Mindestwert liegt, auf eine Fehlfunktion der Übertragungseinheit (9, 10) schließt und ein Warnsignal und/oder den Abbruch eines mit der Waschmaschine (1) durchgeführten Waschprogramms verursacht.

## Claims

1. Method for the regulation of the rotational speed and control of a drum (3) filled with washing in the case of a washing machine (1), having a detergent solution container (2), which is suspended so as to swing and in which the drum (3) is mounted rotatably, the drive of the drum (3) being effected by a drive motor (6) and a transmission unit (9, 10), which is disposed between a drive shaft (8) of the drum (3) and a drive shaft (7) of the drive motor (6), having a regulating and control unit (S) for influencing the rotational speed of the drive motor (6),
**characterised in that**
the washing machine (1) is provided with a measuring device (M) which determines the dynamic component of the signal of a sensor which picks up the mode or the acceleration of the detergent solution container (2), and
**in that** the regulating and control unit (S) actuates the drive motor (6) at a minimum motor rotational speed n_{M} which, in the correct state of the transmission device, produces a drum rotational speed n_{T} which is above the abutting rotational speed n_{A} at which the washing abuts against the casing of the drum (3) as a result of the centrifugal force, and **in that** an evaluation circuit (A₁) filters the lowest frequency from the frequency spectrum of the dynamic signal component determined by the measuring device and determines herefrom the drum rotational speed n_{Ti}, and **in that** the values measured from the minimum motor rotational speed n_{M} and measured drum rotational speed n_{Ti} can be used for self-adjustment or respectively self-monitoring of the regulating and control unit (S).

2. Method according to claim 1,
**characterised in that**
a determination of the transmission ratio of the transmission unit (9, 10) is undertaken during self-adjustment of the regulating and control unit (S) and a further evaluation circuit (A₂) thereby compares the motor rotational speed n_{Mi} determined by a rotational speed measuring device (11) and the drum rotational speed n_{Ti} determined by the evaluation circuit (A₁) and, from the comparative value, calculates the transmission ratio ü_{R} of the transmission unit.

3. Method according to claim 2,
**characterised in that**
the value for the transmission ratio ü_{R} calculated by the further evaluation circuit (A₂) is supplied to a memory (SP) in communication with the regulating and control unit (S) and **in that** subsequently the regulating and control unit (S) influences the motor rotational speed n_{M} as a function of the stored value of the transmission ratio ü_{R}.

4. Method according to at least one of the preceding claims 1 to 3,
**characterised in that**
the further evaluation circuit (A2), when calculating a transmission ratio ü_{R}, which lies below a minimum value, infers an error function of the transmission unit (9, 10) and causes a warning signal and/or the stoppage of a wash programme implemented by the washing machine (1).

## Revendications

1. Procédé de régulation de la vitesse de rotation et de commande d'un tambour (3) rempli de linge d'une machine à laver (1), avec un réservoir ou contenant à lessive (2) suspendu de manière oscillante dans lequel le tambour (3) peut tourner, le tambour (3) étant entraîné par un moteur d'entraînement (6) et une unité de transmission (9, 10) disposée entre un arbre d'entraînement (8) du tambour (3) et un arbre de sortie (7) du moteur d'entraînement (6), avec une unité de régulation et de commande (S) pour influencer la vitesse de rotation du moteur d'entraînement (6),
**caractérisé par le fait**
**que** la machine à laver (1) est munie d'un dispositif de mesure (M) qui détermine la composante dynamique du signal d'un capteur qui mesure la course ou l'accélération du réservoir à lessive (2), et
**que** l'unité de régulation et de commande (S) entraîne le moteur d'entraînement (6) à une vitesse de rotation du moteur minimale n_{M} qui, dans l'état correct du dispositif de transmission, provoque une vitesse de rotation du tambour n_{T} supérieure à la vitesse de rotation d'application n_{A} à laquelle le linge est appliqué contre l'enveloppe du tambour (3) par la force centrifuge, et qu'un circuit d'évaluation (A₁) filtre la fréquence la plus basse du spectre de fréquences de la composante dynamique du signal déterminée par le dispositif de mesure et détermine à partir de celle-ci la vitesse de rotation du tambour n_{Ti}, et que les valeurs mesurées à partir de la vitesse de rotation du moteur minimale n_{M} et de la vitesse de rotation du tambour n_{Ti} mesurée peuvent être utilisées pour l'auto-ajustement ou l'autocontrôle de l'unité de régulation et de commande (S).

2. Procédé selon la revendication 1,
**caractérisé par le fait**
**que** lors de l'auto-ajustement de l'unité de régulation et de commande (S), le rapport de transmission de l'unité de transmission (9, 10) est déterminé et que, pour ce faire, un autre circuit d'évaluation (A₂) compare la vitesse de rotation du moteur n_{Mi} déterminée par un dispositif de mesure de la vitesse de rotation (11) et la vitesse de rotation du tambour n_{Ti} déterminée par le circuit d'évaluation (A₁) et calcule à partir de la valeur comparative le rapport de transmission ü_{R} de l'unité de transmission.

3. Procédé selon la revendication 2,
**caractérisé par le fait**
**que** la valeur calculée par l'autre circuit d'évaluation (A₂) pour le rapport de transmission ü_{R} est fournie à une mémoire (SP) en liaison avec l'unité de régulation et de commande (S) et qu'ensuite l'unité de régulation et de commande (S,) influence la vitesse de rotation du moteur n_{M} en fonction de la valeur mémorisée du rapport de transmission ü_{R}.

4. Procédé selon au moins l'une des revendications précédentes 1 à 3,
**caractérisé par le fait**
**que**, s'il calcule un rapport de transmission ü_{R} inférieur à une valeur minimale, l'autre circuit d'évaluation (A₂) conclut à un dysfonctionnement de l'unité de transmission (9, 10) et émet un signal d'alerte et/ou provoque l'interruption d'un programme de lavage exécuté par la machine à laver (1).
